# EUROPEAN PATENT APPLICATION

(11) **EP 2 385 233 A1**
(43) Date of publication of application: **09.11.2011**
(21) Application number: 10162308.0
(22) Date of filing: 07.05.2010
(51) Int. Cl.: F02C 6/18, F02C 1/10, F01D 17/08, F23R 3/00, F01K 23/10, F23N 5/08

(54) **Method for the operation of a gas turbine unit based on the combustor wall temperature**

(71) Applicant: Alstom Technology Ltd, 5400 Baden (CH)
(72) Inventor: Lachaux, Thierry, 5242 Birr (CH); De la Cruz Garcia, Marta, 8006 Zürich (CH); Winkler, Dieter, 79787 Lauchringen (DE); Burdet, Andre, 6300 Zug (CH); Wettstein, Hans, 8008 Zürich (CH)

(57) **Abstract**

The invention relates to a method for controlling the operation of a gas turbine with a compressor (2) compressing intake air (1) and with at least one combustor (8, 9) for the combustion of liquid and/or gaseous fuel (5, 6) in the compressed gas stream (12, 14) and at least one turbine (3, 4) for expanding the combustion air downstream of the combustor (8, 9) for the generation of work, wherein a closed loop control and/or a protection system is used for controlling actuators of the gas turbine, and wherein this closed loop control is at least partly based on the measurement of a combustor wall temperature (28-30). The invention furthermore relates to a gas turbine unit, in particular with flue gas recirculation, for carrying out such a method.

## Description

### TECHNICAL FIELD

The present invention relates to a method for controlling the operation of a gas turbine with single combustion or sequential combustion and variable operating parameters. It furthermore relates to a gas turbine unit for the application of such a method.

### PRIOR ART

Fossil fuel based power plants contribute to the release of CO₂ in the Earth's atmosphere while providing worldwide a significant amount of electricity and heat for industry and domestic use. Carbon Capture and Storage (CCS) is part of currently developed solutions and CCS is on its way to be introduced in the world economy to reduce the release of human-made greenhouse gases in the atmosphere. It is recognized that fuel gas burning combined-cycle power plant (CCPP) technology is one of the least CO₂ emitting fossil-fuel power generation system due to its low C/H ratio fuel and relatively high cycle efficiency. The recirculation of the flue gas through the engine, so-called Flue Gas Recirculation (FGR) can be an effective technique for post-combustion CO₂ capture in CCPP and seems to be a promising CCS technology in the mid-term. FGR substantially reduces the volume flow at the exhaust gas turbine to be treated in the post-combustion CO₂ capture unit and simultaneously increases the CO₂ concentration in this exhaust gas..

However, the effects of FGR but equally of other operating parameters like very low part load operation or with low mass flow or low flame temperature or with steam injection or with high fogging on the combustion process of the gas turbine have to be taken into account. Just to give one example of such a parameter influencing operating parameters, FGR shall be discussed, which is essentially a technique that enables the gas turbine to consume almost all O₂ freely available in the oxidant for its conversion to CO₂, without modifying the energy input to the system. FGR contributes to the dilution of the oxidant composition leading to higher N₂ and CO₂ concentrations but lower O₂ concentration. FGR in any case changes the combustion behaviour and correspondingly asks for adapted control of the whole gas turbine in order to take the particulars of FGR into account and nevertheless allow stable operation under variable load conditions and under variable FGR conditions.

Variables used for gas turbine control measurements are typically compressor plenum temperature and pressure or pressure ratio, turbine exit temperature (average and/or distribution), power and fuel and/or water and/or steam injection flow rates, VGV position etc.

### SUMMARY OF THE INVENTION

The present invention aims at providing a new method for the control of a gas turbine unit, in particular of a gas turbine unit, which is operated with variable operating parameters. A relevant criterion for a correct operation of typical gas turbine burners is the desired flame position. But this is not directly measured by any of the above mentioned variables which are used for control of the gas turbine operation according to the state-of-the-art.

The invention proposes a direct or indirect measurement of the flame position in the combustor via the determination of the combustor wall temperature and consequentially a faster recognition and response to any deviation than possible with the current measurement variables.

More specifically, the present invention proposes a method for controlling the operation of a gas turbine with a compressor compressing intake air and with at least one combustor for the combustion of liquid and/or gaseous fuel in the compressed combustion air stream and at least one turbine for expanding the combustion air downstream of the combustor for the generation of work. In accordance with the proposed invention, a closed loop control is used for controlling the actuating variables of the gas turbine, and this closed loop control is at least partly based on the measurement of a combustor wall temperature. The actuating variables are typically the variable inlet guide vane position, fuel, steam or water injection flow rates (valves), inert fluid injection flow rates, flue gas recirculation ratio, etc..

Indeed it was found that the direct or indirect measurement of the combustor wall temperature can be used as an excellent control variable, which can be determined easily and which is closely related to the flame position which in turn is indicating the combustion quality. Indeed the flame position is one of the most important operating features, however conventional measurements, apart from simple flameout monitoring, do not sufficiently monitor this parameter. In contrast to direct optical flame shape and flame position determination techniques, which are technically expensive, difficult and must take into account flame fluctuations etc, the measurement of the wall temperature, preferably at different axial and/or circumferential positions, of the combustion chamber wall provides a simply measurable and easy to process indicator for both closed loop control purposes and also for protection limitation purposes.

There is a strong correlation of the longitudinal wall temperature distribution and the flame position. The flame position is a good measure for the proper operation status of a combustor, not only in the case of Flue Gas Recirculation (FGR), but also in another operating conditions such as very low part load operation or with low mass flow or low flame temperature or with steam injection, with high fogging etc.. This applies to most of the combustors, which use the lean premix and/or auto-ignition principles. Therefore a measurement of the longitudinal wall temperature distribution in a combustor can be used very reliably as a control parameter in a closed loop control influencing the actuators of the gas turbine such as the VIGV position, any injection fluid control valves and/or the FGR flow rate control device. It can also be used as a protection variable by comparing to limit values for allowable operation conditions with automatic intervention if such values are exceeded.

The measurement of the longitudinal wall temperature distribution can be done at distinct points along the liner with thermocouples or other temperature sensors. It is also possible to use measurement point rows with different circumferential positions and to evaluate average values for the points in the same axial position. The measurement points can be at the circumferential positions (e.g. at a position where a flame hot spot is supposed to be located).

Another measurement option is using pyrometers or infrared camera technology directed towards the inner combustor wall surfaces. This allows a continuous monitoring and using different evaluation software determining either the temperature level or temperature gradients in space and/or in time. The latter allows also a fast protection in case of over-firing. Pyrometric or infrared probe signals can distinguish the flame radiation from the background wall radiation by appropriate frequency analysis. The technology of the so-called fire-eyes or flame detectors can be adapted to the evaluation of the wall surface temperature sensing according to the proposed measurement.

According to a preferred embodiment therefore, the closed loop control can be based on at least one or two local measurements of the combustor wall temperature, wherein these local measurements are carried out at different axial positions of the combustion chamber. Normally three or at least three, preferably five or at least five local measurements, optionally with redundancy, are provided at specific axial positions along the combustion chamber wall) of the combustor wall temperature are used for the closed loop control. Preferably the local measurement points are distributed essentially over the axial length of the combustion chamber. The local measurements can be carried out by temperature sensors and/or thermocouples located in or at the combustion chamber wall.

Preferably the temperature sensors and/or thermocouples are located on and/or integrated into the combustion chamber wall connected from the cooler exterior of the combustion chamber wall. In case of a double wall combustion chamber with cooling via the interspace between the two walls of the double wall combustion chamber the temperature sensors and/or thermocouples shall be located in close thermal connection with the hotter wall.

As mentioned above, it is also possible to measure a longitudinal combustor wall temperature distribution using for example pyrometers or infrared camera technology, and then the closed loop control is at least partly based on this longitudinal combustor wall temperature distribution. Preferably these optical techniques use spectral filtering for distinguishing direct flame radiation from wall radiation, as only the latter is directly representative of the wall temperature distribution. Furthermore it is possible to measure the combustor wall temperature distribution using in addition to the temperature sensors at least one pyrometer and/or an infrared camera technology as a continuous control or dual or multiple control.

According to yet another preferred embodiment, from a multitude of local combustor wall temperature measurements and/or from a longitudinal combustor wall temperature distribution one or more control variables are calculated for the closed loop control, typically including a step of digitalisation. In case of sequential combustion, different control variables can be calculated for each combustor. In case of a multitude of local combustor wall temperature measurements preferentially in a first step a longitudinal combustor wall temperature distribution is calculated by interpolation (spline or the like), and in a second step a single control variable is calculated for the closed loop control. The single control variable can for example be directly or indirectly related to the measured and/or interpolated hotspot position of the temperature distribution and/or be related to a gradient. E. g the peak value and/or an average around the peak value is used.

Generally for the closed loop control a comparison of the combustor wall temperature based control parameter with set points can be used. In case of protection, which is typically implemented using separate independent processors, (upper or lower) limit values can be used in case of exceeding (below and above, respectively) them initiating automatic protective interventions.

According to yet another preferred embodiment, the temperature measurement is evaluated as a function of time, normally at least every 0.1-5 seconds, preferably every 0.5-2 seconds.

According to a further preferred embodiment, the temperature measurement is carried out at at least two different circumferential positions of the combustor (in case of multiple can combustors in all or only a part of the combustors) and/or of the turbine in case of an annular combustion chamber.

The gas turbine can be a sequential combustion gas turbine with a compressor compressing intake air, with a first combustor for the combustion of liquid and/or gaseous fuel in the compressed gas stream, with a high-pressure turbine expanding the combustion air for the generation of work, with a second combustor for the combustion of liquid and/or gaseous fuel optionally under self ignition conditions and with a low pressure turbine for expanding the combustion air downstream of the second combustor for the generation of work. Also in this case the closed loop control of the gas turbine can be based on the measurement of the wall of the first combustion chamber, and/or of the second combustion chamber, wherein again preferably at least three local measurements of the combustor wall temperature are carried out in each combustion chamber for this control, each measurement carried out at different axial positions of the respective combustion chamber. Furthermore the present invention relates to a gas turbine for carrying out a method as described above. The gas turbine comprises a compressor compressing intake air and at least one combustor for the combustion of liquid and/or gaseous fuel in the compressed gas stream and at least one turbine for expanding the combustion gas downstream of the combustor for the generation of work. It furthermore comprises at least two, preferably at least three, more preferably at least five temperature sensors (optionally redundant) located at two different axial positions in at least one combustion chamber of the combustor, or a pyrometer or an infrared camera for the determination of a longitudinal combustor wall temperature distribution. Furthermore it comprises a control unit for the collection of correspondingly measured temperature data, which is operatively, via the control system, connected to the actuators of the gas turbine system for the closed loop control which is at least partly based on the measurement of the combustor wall temperature.

Such a gas turbine can be a sequential combustion gas turbine with a compressor compressing intake air, with a first combustor for the combustion of liquid and/or gaseous fuel in the compressed gas stream, with a high-pressure turbine expanding the combustion gas for the generation of work, with a second combustor for the combustion of liquid and/or gaseous fuel under self ignition conditions and with a low pressure turbine for expanding the combustion gas downstream of the second combustor for the generation of work.

So the invention can relate to a gas turbine with one or two combustors, which can be operated with variable FGR (including also the operation at 0%FGR) and variable combustor exit temperature characterized in that it uses a closed loop control cycle based on measurements of a longitudinal combustor wall temperature distribution, which influences via a control processing cycle actuating variables with influence on the combustor operation such as VIGV position, fuel or inert fluid injection flow rates, FGR ratio or others. The wall temperature can be measured at distinct points by thermocouples or equivalent sensors. The wall temperature signals and/or their average level and or their gradients can be compared against set point values (closed loop control) and the deviation be used for determining the desired actuator changes. And/or the wall temperature signals and/or their average level and or their gradients can be compared against limit values (protection) and in case of deviation/exceeding them an automatic intervention can be launched by the protection system. The measured wall temperature distribution signals can be processed in at least two independent processors in order to make the protection function independent from the closed loop control functions.

If three independent measurements (or a multiple of 3) and independent processors are used, a 2 of 3 voting system is preferably used in order to increase the availability and the reliability of either the closed loop control system and/or the protection system.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic representation of a gas turbine set up with sequential combustion;
- Fig. 2: shows a schematic representation of a combined cycle gas turbine set up with flue gas recirculation; and
- Fig. 3: shows as an example the temperature distribution for different modes of flue gas recirculation.

### DESCRIPTION OF PREFERRED EMBODIMENTS

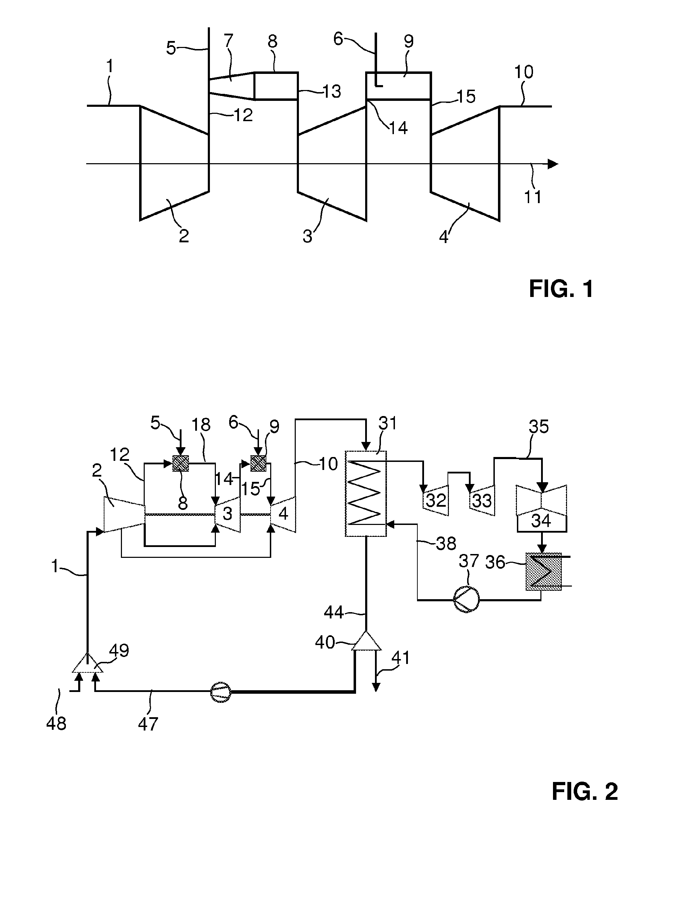

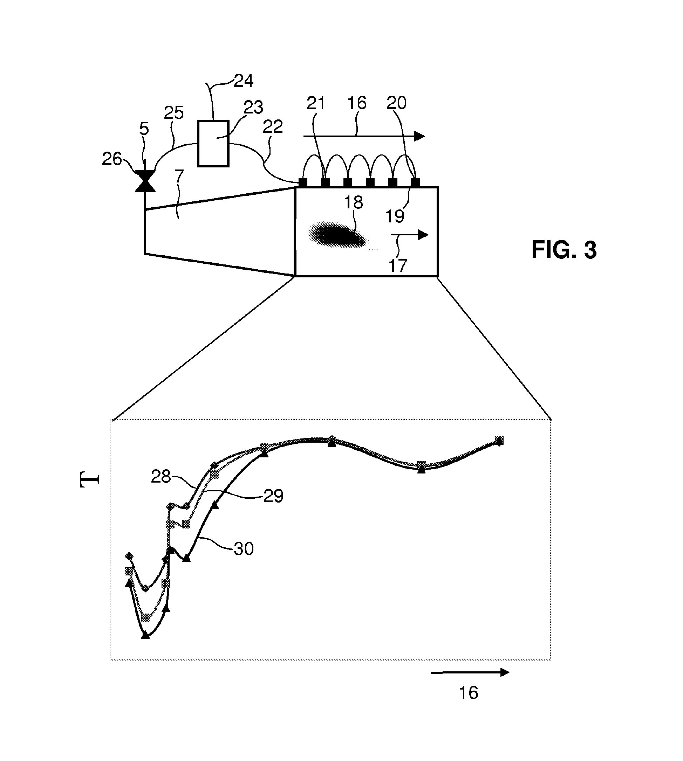

Figure 1 shows s schematic representation of a gas turbine unit with sequential combustion. This is, for the sake of an example, the invention is equally applicable for systems with one combustion stage. Intake air 1 is compressed in a compressor 2 and the compressed air 12 downstream thereof is introduced into a first combustor 7, 8. Fuel for this first combustor 7, 8 is provided via line 5, and the combustor is comprising a premixing burner 7 such as for example disclosed in EP 0 681 099 figure 3, and downstream thereof there is provided the first combustion chamber 8. This combustion chamber 8 is typically an annular combustion chamber circumferentially extending around the turbine axis 11, it may however also be a multiple can combustion chamber.

The fuel is burned in this combustion chamber 8 and the combustion gas 13 downstream of the first combustion chamber 8 is expanded under generation of work in a high pressure turbine 3. Downstream of this turbine 3 the partially expanded gas 14 is introduced into a second- combustion chamber 9 with an extra fuel supply 6. Downstream of this second combustor 9 the combustion gas 15 is expanded in a low pressure turbine 4, downstream of which the exhaust gases 10 are either released to the surrounding or to a HRSG or partially integrated into a recirculation cycle.

The above-mentioned method can be applied by providing the corresponding temperature sensing elements 20 (Fig 3) in either the first combustion chamber 8 or the second combustion chamber 9 or in both, as will be detailed further below.

The present invention is also suitable for combined cycle plants working with flue gas recirculation, as, as outlined above, flue gas recirculation necessitates different control strategies than conventional gas turbine operation due to the changed combustion properties. It should however be pointed out that the proposed method is not at all limited to situations where flue gas recirculation is implemented, but is generally applicable to any kind of gas turbine control.

A schematic illustration of a combined cycle or cogeneration system with flue gas recirculation (FGR) is given in figure 2. The sequential combustion gas turbine unit on the top left part essentially corresponds to what is illustrated and has been described in connection with figure 1. However the exhaust gases 10 in this case in a first step pass a heat recovery steam generator 31, which as such is well know to the person skilled in the art. Steam generated in this heat recovery steam generator 31 is sequentially expanded over a high pressure steam turbine 32, an intermediate pressure steam turbine 33, and a final low pressure steam turbine 34. Downstream of the low pressure steam turbine 34 the steam is condensed in a condenser 36, it typically passes a deaerator and is then pumped via pump 37 to reenter the heat recovery steam generator 31 in a counter flow direction to the flow of the exhaust gases. So the output of the heat recovery steam generator 31 can also be used for another heat sink or a combination of another heat sink with steam turbines. Downstream of the heat recovery steam generator 31 a part of the exhaust gas 44 is directed to the entry side of the gas turbine again, via line 47. The ratio of flue gas recirculation is determined by splitting element 40, which regulates how much of the flow is recycled and how much is allowed to exit the system via line 41. So this is the flue gas recirculation, and in order to allow for a stable combustion process this recirculation line 47 has to be joined with line 48 bringing in ambient air and finally the intake gas 1 is a mixture of flue gas recirculation gas and newly introduced ambient air. As mentioned above the ratio of flue gas recirculation, has a serious impact on the whole operation of the gas turbine, and in particular on the flame position.

Specifically, the FGR condition (i.e. O₂ depletion and CO₂ addition) has a noticeable impact on the gas turbine combustion since the kinetics of the chemistry is largely modified. Oxidant mixtures corresponding to FGR conditions slow down the laminar burning velocity and consequently increase the time of heat release. Therefore the reaction zone is thickened. This can qualitatively be confirmed through visualisation of the flame from downstream , and in case of FGR the flame is moved further downstream in the combustion chamber, the reaction zone expands and is located outside the burner. The lean premix flame reactivity is changed and actually decreases with FGR, while still keeping the flame into the combustion chamber at realistic gas turbine engine pressure.

The liner thermocouple data are shown next in Fig. 3 and help to better understand the change of the flame heat footprint along the combustor chamber. The liner temperature profile along the flow direction observed in Fig. 3 appears to be almost monotonically modified in the first part (roughly 1/2 of the total combustion chamber) when the FGR level is increased. This fact correlates the qualitative optical analysis, i.e. the flame moves in the downstream direction.

As already outlined above in accordance with the present invention a control is provided by either sensing optically a longitudinal temperature distribution profile along the combustion chamber wall, or, as specifically illustrated in figure 3, by providing one or more rows of temperature sensors 20 along the combustor wall. Typically these temperature sensors 20 are located in the combustor wall , which is typically coated with a thermal barrier coating on the flame side. So these temperature sensors 20 actually do not measure normally the true surface temperature on the combustor side of the combustion chamber wall 19 but they measure a value which is already reduced by the thermal barrier coating and the substrate part there, which is typically a heat resistant metal alloy forming the combustion chamber wall in which the temperature sensors are preferably assembled.. The sensors 20 are distributed along the axial length of the combustor wall, so along arrow 16. They are either sequentially connected via connections 21 and then via one connecting line 22 to a control unit 23 (star connection), they can however also be each individually and directly connected to the control unit 23. The measurement values of the sensors 20 are used in the control unit 23 for the closed loop control of the gas turbine operation. This is illustrated schematically by the control line 25 to a fuel valve 26 provided in fuel line 5 for the situation, where the actuator of the gas turbine is the valve 26 for the fuel feed 5 of the burner 7. The control actuation however is not limited to this specific control but may be, as schematically illustrated by line 24, used to control also other actuators of the gas turbine. Some of them were mentioned above.

### LIST OF REFERENCE SIGNS

- 1: intake air, ambient air
- 2: compressor
- 3: high-pressure turbine
- 4: low-pressure turbine
- 5: fuel for first combustion chamber
- 6: fuel for a second combustion chamber
- 7: burner of first combustion chamber
- 8: first combustion chamber
- 9: second combustion chamber with burner
- 10: exhaust
- 11: turbine axis, axial direction
- 12: compressed air
- 13: combustion gas downstream of combustor 8
- 14: partially expanded air downstream of high pressure turbine 3
- 15: combustion gas downstream of combustor 9
- 16: axial position along combustion chamber
- 17: flow direction
- 18: flame
- 19: combustor wall
- 20: temperature sensors
- 21: connections
- 22: connecting line to control unit
- 23: control unit
- 24: control line to other gas turbine control elements
- 25: control line to fuel valve
- 26: fuel valve in line 5
- 28: temperature distribution as a function of axial location for no flue gas recirculation
- 29: temperature distribution as a function of axial location for medium flue gas recirculation
- 30: temperature distribution as a function of axial location for high flue gas recirculation
- 31: heat recovery steam generator
- 32: high-pressure steam turbine
- 33: intermediate pressure steam turbine
- 34: low pressure steam turbine
- 35: steam connection line
- 36: condenser
- 37: pump
- 38: feedwater line to HRSG 31
- 40: splitting element for flue gas recirculation
- 41: not recycled exhaust gas
- 44: exhaust gas downstream of HRSG 31
- 47: flue gas recirculation line
- 48: ambient air
- 49: flue gas/ambient air mixture
- T: wall temperature

## Claims

1. Method for controlling the operation of a gas turbine with a compressor (2) compressing intake air (1) and with at least one combustor (8, 9) for the combustion of liquid and/or gaseous fuel (5, 6) in the compressed gas stream (12, 14) and at least one turbine (3, 4) for expanding the combustion gas downstream of the combustor (8, 9) for the generation of work, wherein a closed loop control and/or a protection control is used for controlling actuators of the gas turbine system, **characterized in that** this control is at least partly based on the measurement of a combustor wall temperature (28-30).

2. Method according to claim 1, wherein the combustor or the combustors operate according to one of the lean premix, rich quench lean or auto-ignition principles.

3. Method according to claim 1 or 2, wherein the control is based on one, two or more local measurements (20) of the combustor wall temperature, wherein said measurements if more than one (20) are taken at different axial positions (16) of the combustion chamber wall (8, 9).

4. Method according to claim 3, wherein three or more or five or more local measurements (20) of the combustor wall temperature are used for the control, wherein preferably the local measurement points are distributed essentially over the axial length of the combustion chamber (8, 9).

5. Method according to any of the preceding claims, wherein the local measurements are carried out by temperature sensors (20) and/or thermocouples located in or at the combustion chamber wall (19), wherein preferably the temperature sensors and/or thermocouples are connected on and/or integrated in the combustion chamber wall side facing away from the interior of the combustion chamber (8, 9), wherein further preferably in case of a double wall combustion chamber with cooling via the interspace between the two walls of the combustion chamber the temperature sensors and/or thermocouples are located in close thermal connection with the hotter wall..

6. Method according to any of the preceding claims, wherein a longitudinal combustor wall temperature distribution is measured using pyrometers or infrared camera technology, and wherein the control is at least partly based on this measured longitudinal combustor wall temperature distribution.

7. Method according to any of the preceding claims, wherein from a multitude of local combustor wall temperature measurements and/or from a longitudinal combustor wall temperature distribution one or more control variables are calculated for the closed loop control or for the protection control, wherein preferably in case of a multitude of local combustor wall temperature measurements in a first step a longitudinal combustor wall temperature distribution is calculated by interpolation, and in a second step the relevant variables are calculated either for the closed loop control or for the protection system or for both.

8. Method according to claim 7, wherein the relevant variables are used for determining the position of the measured and/or interpolated hotspot of the distribution and/or related to a temporal and/or spatial gradient, wherein preferably the peak value and/or an average around the peak value is used, and wherein preferably for the protection system a comparison with limit values is used in case of exceeding them initiating automatic intervention, and for the closed loop control the deviations from set point values are used for generating signals to the actuators, wherein further preferably the processing of the protection-relevant data is executed in elements and processors, which are physically independent from the closed loop control system.

9. Method according to any of the preceding claims, wherein the temperature measurement is evaluated in distinct time intervals, preferably at least every 0.1-5 seconds, more preferably every 0.5-2 seconds.

10. Method according to any of the preceding claims, wherein the actuating variables of the actuators are actuating variables of the gas turbine system which are suitable to influence the flame position, the flame stability or the flame pulsations in the combustor, preferably selected from the group of: variable inlet guide vane position, compressor plenum temperature, pressure or pressure ratio, turbine exit temperature as average and/or distribution, power and fuel and/or water and/or inert fluid and/or steam injection flow rates, flue gas recirculation ratio or others.

11. Method according to any of the preceding claims, wherein the temperature measurement is carried out at at least two different circumferential positions of the combustor and/or of the turbine in case of an annular combustion chamber.

12. Method according to any of the preceding claims, wherein three independent temperature measurements and three independent associated control processors are used, and wherein a 2 of 3 voting system is used for the control and or for the protection in order to increase availability, reliability and safety.

13. Gas turbine for a method according to any of the preceding claims with a compressor (2) compressing intake air (1) and with at least one combustor (8, 9) for the combustion of liquid and/or gaseous fuel (5, 6) in the compressed gas stream (12, 14) and at least one turbine (3, 4) for expanding the combustion air downstream of the combustor (8, 9) for the generation of work, comprising at least two, preferably at least three, more preferably at least five temperature sensors (20) located at two different axial positions (16) in at least one combustion chamber of the combustor (8, 9), and/or a pyrometers and/or an infrared camera for the determination of a longitudinal combustor wall temperature distribution, and comprising one or more evaluation units for the collection of correspondingly measured temperature data, where these evaluation units are operatively connected to the control system and/or to the protection system wherein preferably the control and protection functions are physically independent from each other.

14. Gas turbine according to claim 13, wherein it is provided as a combined cycle with a heat recovery steam generation, and wherein it comprises flue gas recirculation, or is prepared for later introduction of flue gas recirculation and carbon dioxide capture.

15. Gas turbine according to claim 13 or 14, wherein it is a sequential combustion gas turbine with a compressor (2) compressing intake air (1), with a first combustor (8) for the combustion of liquid and/or gaseous fuel (5) in the compressed gas stream (12), with a high-pressure turbine (3) expanding the combustion air for the generation of work, with a second combustor (9) for the combustion of liquid and/or gaseous fuel (6) under self ignition conditions and with a low pressure turbine (4) for expanding the combustion air downstream of the second combustor (9) for the generation of work, wherein temperature sensors are provided on the wall of the first combustion chamber (8) as well as of the second combustion chamber (9), wherein preferably at least three local temperature sensors (20) are located on each combustor wall, each at different axial positions (16) of the respective combustion chamber (8, 9).
